Europäisches Patentamt

European Patent Office

Office européen des brevets

(11) Veröffentlichungsnummer: **0 258 747**

**A2**

(12) **EUROPÄISCHE PATENTANMELDUNG**

(21) Anmeldenummer: 87112073.9

(51) Int. Cl.⁴: **B01D 53/14 , B01J 41/04**

(22) Anmeldetag: 20.08.87

(30) Priorität: 02.09.86 DE 3629767

(43) Veröffentlichungstag der Anmeldung:
09.03.88 Patentblatt 88/10

(84) Benannte Vertragsstaaten:
**BE DE ES FR GB IT NL**

(71) Anmelder: **Bayer do Brasil S.A.**
**Caixa Postal 22523**
**01000 Sao Paulo/S.P.(BR)**

(72) Erfinder: **Bruening, Wilhelm, Dr.**
**22231 Rua Presidente Carlos de Campos**
**115, bloco 2**
**Apto. 1004 Laranjeiras Rio de Janeiro(BR)**
Erfinder: **Uchdorf, Rudolf, DI.**
**Flensburger Zeile 1 h**
**D-4150 Krefeld 11(DE)**
Erfinder: **Mitschker, Alfred, Dr.**
**Am Gartenfeld 50**
**D-5068 Odenthal(DE)**

(74) Vertreter: **Steiling, Lothar**
**Bayer AG Zentralbereich Patente, Marken**
**und Lizenzen**
**D-5090 Leverkusen, Bayerwerk(DE)**

(54) Verfahren zur Entfernung von sauren und/oder schwefelhaltigen Gasen.

(57) Die vorliegende Erfindung betrifft ein Verfahren zur Entfernung von sauren und/oder schwefelhaltigen Gasen aus technischen Gasen oder Abgasen durch Behandlung der Gase mit basischen Substanzen, wobei die basischen Substanzen

$$- \underset{\underset{H}{|}}{N} \text{H-Gruppen}$$

enthaltende Trägermaterialien sind, wobei R = H, Alkyl, Aryl sein kann.

EP 0 258 747 A2

## Verfahren zur Entfernung von sauren und/oder schwefelhaltigen Gasen

Die vorliegende Erfindung betrifft ein Verfahren zur Entfernung von sauren und/oder schwefelhaltigen Gasen aus technischen Gasen oder Abgasen durch Behandlung der Gase mit basischen Substanzen.

Verfahren zur Entfernung von sauren und/oder schwefelhaltigen Gasen aus technischen Gasen oder Abgasen sind bereits bekannt. So beschreibt die DE-A 3 004 757 die Entfernung von Schwefelwasserstoff aus technischen Gasen mittels wäßriger Lösungen von Alkalimetallhydroxiden. Gemäß de DE-A 3 236 600 und DE-A 3 236 601 erfolgt die Entfernung von Kohlendioxid und Schwefelwasserstoff aus technischen Gasmischungen mittels einer Wäsche mit einer wäßrigen Lösung von Methyldiethanolamin. Auch die DE-A 3 027 220 befaßt sich mit der Entfernung von Schwefelwasserstoff aus technischen Gasen mit wäßrigen Alkalilösungen. Die BE-A 844 142 beschreibt ein Verfahren zur Entfernung von Phosgen aus Abgasen mittels wäßriger Lösungen von Alkalimetallhydroxiden, die eine geringe Menge an Ammoniak enthalten.

Ferner sind aus den DE-A 3 427 133 und DE-A 3 427 134 sowie der EP-A 173 908 Verfahren zum Entfernen von $CO_2$ und/oder $H_2S$ bekannt, in denen die Entfernung in Alkanolamin enthaltenden Absorptionsflüssigkeiten durchgeführt wird. Gemäß der DE-A 3 429 979 geschieht die Entfernung der sauren und/oder schwefelhaltigen Gase in Basen enthaltenden wäßrigen Lösungen in Gegenwart eines, eingebaute tertiäre oder quarternäre Stickstoffatome aufweisenden basischen Ionenaustauschers.

Es wurde nunmehr ein Verfahren zur Entfernung von sauren und/oder schwefelhaltigen Gasen gefunden, welches in überraschend einfacher Weise durchführbar ist und darüber hinaus sehr gute Resultate bringt. Bei diesem Verfahren werden als basische Substanzen primäre oder sekundäre Amine enthaltende Trägermaterialien eingesetzt.

Gegenstand dieser Erfindung ist somit ein Verfahren zur Entfernung von sauren und/oder - schwefelhaltigen Gasen aus technischen Gasen oder Abgasen durch Behandlung der Gase mit basischen Substanzen, welches dadurch gekennzeichnet ist, daß die basischen Substanzen

$$- \overset{\overset{\displaystyle R}{|}}{N} H\text{-Gruppen}$$

enthaltende Trägermaterialien sind, wobei R = H, ggf. substituiertes Alkyl, Aryl sein kann. Besonders bevorzugt sind aromatische Trägermaterialien mit Aminomethyl-Gruppen. Als Trägermaterialien im Sinne dieser Erfindung sind sowohl anorganische oder auch organische Substanzen geeignet. Eine bevorzugte Verfahrensvariante des erfindungsgemäßen Verfahrens besteht darin, daß die Trägermaterialien Polymerisationsharze sind. Dies können Copolymere aus polymerisierbaren Vinylverbindungen sein, die entweder im Molekül selbst oder nach entsprechender Funktionalisierung $- \overset{\overset{\displaystyle R}{|}}{N} H$-Gruppen aufweisen. Mit Polyvinylverbindungen vernetzte Polymerisationsharze sind besonders geeignet. Als Monovinylverbindungen sollen stellvertretend Styrol, Chlorstyrole, Alkylstyrole, Chlormethylstyrole, (Meth)acrylate ($C_1$ -$C_6$), (Meth)acrylamide bzw. (Meth)acrylamide auf Basis Polyamin, Glycidylmethacrylat und Vinylglycidylether genannt sein. Als Polyvinylverbindungen kommen beispielsweise DVB, TVB, Ethylenglykoldimethacrylat, Methylenbisacrylamid, Divinylethylenharnstoff, Octadien 1,7, Hexadien 1,5 und Triallylcyanurat zum Einsatz. Die Funktionalisierung zu den beanspruchten Harzen erfolgt nach an sich bekannten Verfahren. Ionenaustauscher bzw. deren Vorprodukte der genannten Art sind bekannt. Sie undihre Herstellung werden z. B. beschrieben in F. Helfferich, Ionenaustauscher, Band 1, 1959, Seiten 10 bis 106 und Ullmanns Enzyklopädie der techn. Chemie, 4. Aufl., Band 13, 1977, Seiten 292 bis 309. Zur Funktionalisierung können auch Polyamine wie z. B. Triethylentetramin oder geeignete Hydrazin-Abkömmlinge eingesetzt werden.

Weitere bevorzugte Trägermaterialien stellen Kondensationsharze dar, die basische $- \overset{\overset{\displaystyle R}{|}}{N} H$-Gruppen aufweisen. Die Herstellung derartiger Harze ist bekannt. Man erhält sie beispielsweise durch Umsetzung von aliphatischen und/oder aromatischen Aminen mit Epichlorhydrin bzw. Formaldehyd. Als aliphatische Amine seien beispielsweise Polyalkylenpolyamine genannt, wie Diethylentriamin, Triethylentetramin, als aromatisches Amin beispielsweise m-Phenylendiamin.

Das erfindungsgemäße Verfahren eignet sich zur Reinigung von beliebigen, neutralen technischen Gasen, d.h. zur Entfernung der in ihnen als Verunreinigung vorliegenden sauren und/oder schwefelhaltigen Gase. Unter "sauren und/oder schwefelhaltigen Gasen" sind im Rahmen der Erfindung insbesondere Schwefelwasserstoff, Schwefelkohlenstoff, Kohlenoxisulfid, Schwefeldioxid, Kohlendioxid, Phosgen, Chlor, Stickoxide und Chlorwasserstoff in gas-bzw. dampfförmigem Zustand zu verstehen.

Eine besonders bevorzugte Ausführungsform des erfindungsgemäßen Verfahrens besteht darin, daß das zu reinigende Gas technisches Kohlenmonoxid mit einem Schwefelgehalt in Form von gasförmigem Schwefelwasserstoff ($H_2S$), Schwefelkohlenstoff ($CS_2$), Kohlenoxidsulfid (COS) und/oder Schwefeldioxid ($SO_2$) von 50 bis 5000 ppm (Gewicht) ist.

Die Entschwefelung des beim erfindungsgemäßen Verfahren besonders bevorzugt einzusetzenden technischen Kohlenmonoxids ist insbesondere im Falle der Weiterverwendung des Kohlenmonoxids zur Herstellung von Phosgen, welches als Ausgangsmaterial für die Herstellung von Polyisocyanaten verwendet wird, von großer praktischer Bedeutung.

Bekanntlich erfolgt die Herstellung von Phosgen durch Umsetzung von technischem Kohlenmonoxid mit Chlor. Dieses Phosgen wird großtechnisch in größtem Umfang zur Herstellung von organischen Polyisocyanaten durch Phosgenierung der ihnen entsprechenden Polyamine verwendet. Falls nun das zur Herstellung des Phosgens verwendete Kohlenmonoxid Schwefel, insbesondere in Form von Schwefelwasserstoff, Schwefelkohlenstoff und/oder Kohlenoxisulfid enthält, führt dies zu einer starken Verminderung der Qualität des resultierenden Polyisocyanats, was sich insbesondere in einer Beeinträchtigung der Farbzahl der aus den Polyisocyanaten hergestellten Polyurethanschaumstoffe äußert. In der Polyurethanchemie ist man daher daran interessiert, als Rohstoff für die Phosgensynthese ein möglichst schwefelfreies Kohlenmonoxid zur Verfügung zu haben.

Beim erfindungsgemäßen Verfahren werden die zu behandelnden Gase bzw. Abgase mit den erfindungsgemäßen $\overset{R}{N}$ H-Gruppen enthaltenden Trägermaterialien in Kontakt gebracht. Da die zu reinigenden Gase im allgemeinen genügend Feuchte enthalten, können die erfindungsgemäßen Trägermaterialien als solche ohne weitere Vorbehandlung mit ihrem jeweiligen Wassergehalt eingesetzt werden, d. h. nicht in einer wäßrigen Umgebung wie bei den bekannten Verfahren. Im Falle zu trockener Gase genügt es, diese nach bekannten Verfahren zu befeuchten oder auch die Kontaktschicht selbst mit Wasser zu besprühen.

Die Menge der zum Einsatz gelangenden Trägermaterialien richtet sich nach der Konzentration der sauren und/oder schwefelhaltigen Gase in den zu behandelnden technischen Gasen. Die Menge der Trägermaterialien beträgt 5 bis 500 1, bevorzugt 10 bis 50 1, pro Nm³/h zu behandelndes Gas. Auch höhere oder niedrigere Mengen der Trägermaterialien können im Prinzip eingesetzt werden.

Die Entfernung der sauren und/oder schwefelhaltigen Gase wird bevorzugt bei Raumtemperatur (ca. 10 bis 30 °C) vorgenommen. Bis zur vollständigen Sättigung des Harzes dauert es unter den beschriebenen Bedingungen zwei bis sieben Tage. Eine besonders bevorzugte Ausführungsform des erfindungsgemäßen Verfahrens besteht darin, daß die Trägermaterialien nach ihrer Sättigung regeneriert werden.

Je nach den entsprechenden Gegebenheiten ist die Durchführung der Regenerierung vorteilhaft nach den drei im folgenden erläuterten Verfahren durchführbar. Eine bevorzugtes Verfahren ist dadurch gekennzeichnet, daß die Regenerierung bei Raumtemperatur durch

a) Behandlung der Trägermaterialien mit HCl und anschliessende Entfernung der nicht verbrauchten HCl durch Waschen mit Wasser

b) sowie die Aktivierung mit Natronlauge vorgenommen wird, wobei die überschüssige Natronlauge anschließend mit Wasser entfernt wird.

Die dabei eingesetzte HCl hat bevorzugt eine Konzentration von 3 bis 10 %, aber auch beim Einsatz von 36 %iger HCl treten im allgemeinen keine Schädigungen an den Trägermaterialien auf. Die Reaktivierung wird mit Natronlauge einer Konzentration von 3 bis 50 %, bevorzugt 3 bis 10 %, vorgenommen.

In den beiden alternativen, im folgenden beschriebenen Verfahren geschieht die Regenerierung bei erhöhter Temperatur mit Natronlauge oder Wasserdampf. Es werden hierbei also keine zusätzlichen Chloride erzeugt. Die Regenerierung mit Natronlauge wird dabei bei Temperaturen zwischen 120 und 200 °C, bevorzugt 130 bis 160 °C, vorgenommen. Die Natronlauge weist bevorzugt eine Konzentration im Bereich von 5 bis 30 % auf.

Wird die Regenerierung mit Wasserdampf vorgenommen, sind Temperaturen zwischen 180 und 235 °C bevorzugt. Der Druck des Wasserdampfes liegt zwischen 9 und 30 bar.

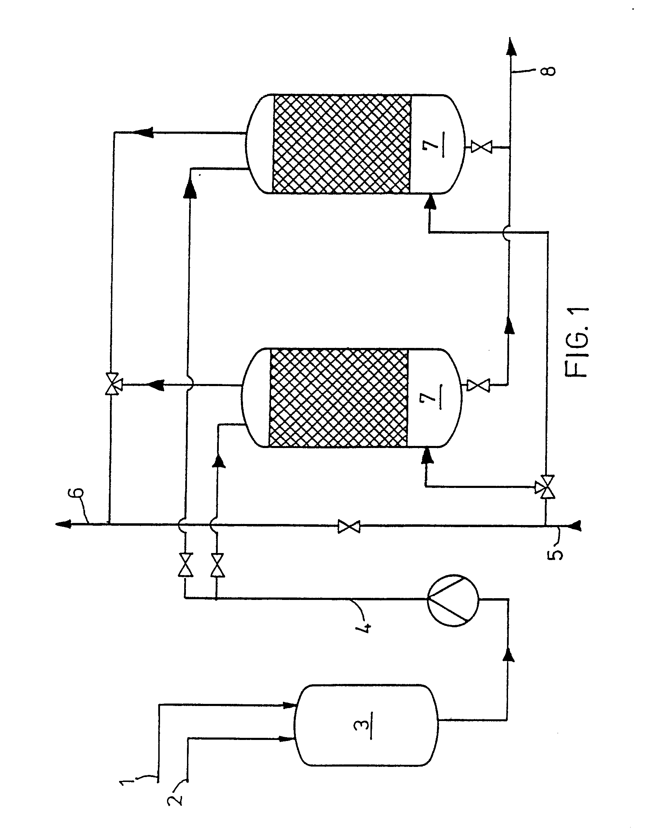

In Fig. 1 ist eine Möglichkeit zur Durchführung des erfindungsgemäßen Verfahrens dargestellt. In dieser Zeichnung bedeuten

(1) NaOH

(2) $H_2O$

(3) Regeneriermittelvorlage

(4) Regeneriermittelstrom

(5) zu reinigendes Gas

(6) gereinigtes Gas

(7) Absorptionstürme

(8) verbrauchtes Regeneriermittel

Das zu reinigende Gas (5) wird durch jeweils einen von zwei mit Trägermaterialien gefüllten Absorptionstürmen (7) geleitet und verläßt diesen als gereinigtes Gas (6). Natronlauge (1) und Wasser (2) werden in der Regenerier mittelvorlage (3) gemischt. Der Regeneriermittelstrom (4) wird jeweils durch den Absorptionsturm (7) geleitet, in dem die Trägermaterialien bereits gesättigt sind. Das verbrauchte Regeneriermittel (8) wird dem System entnommen und kann dann aufbereitet werden.

Das über die Leitung (6) dem System entnommene gereinigte Gas weist einen im Vergleich zum ungereinigten Gas stark verminderten Gehalt an sauren und/oder schwefelhaltigen Verunreinigungen auf. So ist es beispielsweise möglich, den Schwefelgehalt eines technischen Kohlenmonoxids von einem Ausgangswert von 1500 ppm (Gewicht) S, insbesondere in Form von $H_2S$, $CS_2$, COS und ggf. $SO_2$) auf unter 20 ppm (Gewicht), teilweise sogar bis auf unter 5 ppm zu senken.

Die Durchführung des erfindungsgemäßen Verfahren ist selbstverständlich nicht auf die zwingende Verwendung der lediglich beispielhaften Vorrichtung gemäß Zeichnung angewiesen.

Die nachfolgenden Beispiele dienen der weiteren Erläuterung des erfindungsgemäßen Verfahrens, ohne dieses zu beschränken.

Beispiele 1 bis 3

Ein makroporöses Styrol/Divinylbenzol-Perlpolymerisat mit einem Anteil von 6 Gew.-% Divinylbenzol wurde aminomethyliert. Die Kapazität an Aminomethylgruppen beträgt 2,15 val/l. Dieses Produkt Ph-CH$_2$-NH$_2$ wurde als Trägermaterial (I) in den folgenden Beispielen eingesetzt. Die im Molverhältnis 1 : 1 aus (I) mit Ethylenoxid und Propylenoxid erhaltenen Produkte wurden als Trägermaterialien II (Ph-CH$_2$-NHEOX) und III (Ph-CH$_2$-NHPOX) eingesetzt.

Jeweils 200 ml (140 g) der Trägermaterialien I, II und III wurden in einen Kugelkühler gefüllt und unbehandeltes Kohlenmonoxid wurde über dieses Harz mit 30 l/h der Verbrennungsapparatur (zur Analyse) zugeführt. Aus der Tabelle geht die gute Adsorptionskapazität der Trägermaterialien hervor.

## Tabelle 1

### Trägermaterial I

| Zeit [h] | S-Konzentration im CO [ppm] | | Adsorption [%] |
|---|---|---|---|
| | vorher | nachher | |
| 0 | 1169 | < 5 | > 99 |
| 4 | 1143 | 8 | > 99 |
| 12 | 1373 | < 5 | > 99 |
| 16 | 937 | 20 | 98 |
| 20 | 937 | 98 | 90 |

### Trägermaterial II

| Zeit [h] | S-Konzentration im CO [ppm] | | Adsorption [%] |
|---|---|---|---|
| | vorher | nachher | |
| 0 | 1138 | < 5 | > 99 |
| 4 | 1084 | < 5 | > 99 |
| 12 | 951 | 7 | > 99 |
| 16 | 1027 | 54 | 95 |
| 24 | 972 | 415 | 57 |
| 28 | 800 | 1160 | 0 |

### Trägermaterial III

| Zeit [h] | S-Konzentration im CO [ppm] | | Adsorption [%] |
|---|---|---|---|
| | vorher | nachher | |
| 0 | 1100 | < 5 | > 99 |
| 4 | 816 | 12 | 98 |
| 12 | 1689 | 93 | 94 |
| 24 | 1278 | 618 | 52 |

Die gesättigten Trägermaterialien wurden mit ca. 5 %iger kalter HCl versetzt und anschließend neutral gewaschen. Nach anschließender Aktivierung der Trägermaterialien mit 5 %iger kalter NaOH zeigten die Trägermaterialien wieder das ursprüngliche Aufnahmevermögen.

Im Gegensatz zu den beiden anderen Trägermaterialien weist das Trägermaterial I neben der hohen Adsorptionsfähigkeit gegenüber Schwefelverbindungen auch eine hohe Adsorptionsfähigkeit gegenüber $CO_2$ auf.

Beispiel 4

Der 600 l fassende Adsorptionsturm einer Höhe von 1200 mm einer Pilotanlage, wie sie in Fig. 1 dargestellt ist, wurde mit 600 l des Trägermaterials I gefüllt.

Ein bereits fünfmal nach jeweils mehrtägigen Versuchen mit 15 %iger NaOH bei 175 °C, 5 bar Druck in 12 Stunden regeneriertes Trägermaterial wurde im folgenden Versuch eingesetzt. Das unbehandelte CO-Gas wies einen S-Gehalt von 1300 ppm auf. Das Gas wurde mit 20 Nm³ CO/h in die in Fig. 1 dargestellte Apparatur eingebracht.

| Laufzeit | S-Gehalt des behandelten Gases |
| h | Gew.-ppm |
|---|---|
| 6 | 5 |
| 14 | 6 |
| 25 | 5 |
| 34 | 5 |
| 49 | 5 |
| 58 | 8 |
| 73 | 9 |
| 86 | 12 |
| 97 | 12 |
| 106 | 85 |
| 116 | 60 |
| 135 | 53 |
| 146 | 185 |
| 150 | 217 |
| 158 | 238 |

Auch nach ca. 100stündigem Betrieb können somit noch Adsorptionsgrade von ca. 99 % erreicht werden.

## Ansprüche

1. Verfahren zur Entfernung von sauren und/oder schwefelhaltigen Gasen aus technischen Gasen oder Abgasen durch Behandlung der Gase mit basischen Substanzen, dadurch gekennzeichnet, daß die basischen Substanzen

$$-\overset{\overset{\displaystyle R}{|}}{N}H\text{-Gruppen}$$

enthaltende Trägermaterialien sind, wobei R = H, Alkyl, Aryl sein kann.

2. Verfahren gemäß Anspruch 1, dadurch gekennzeichnet, daß die Trägermaterialien Polymerisationsharze sind.

3. Verfahren gemäß Anspruch 1 oder 2, dadurch gekennzeichnet, daß die Trägermaterialien Kondensationsharze sind.

4. Verfahren gemäß einem der Ansprüche 1 bis 3, dadurch gekennzeichnet, daß das zu reinigende technische Gas technisches Kohlenmonoxid mit einem Schwefelgehalt in Form von gasförmigem Schwefelwasserstoff ($H_2S$), Schwefelkohlenstoff ($CS_2$), Kohlenoxidsulfid (COS) und/oder Schwefeldioxid ($SO_2$) von 50 bis 5000 ppm (Gewicht) ist.

5. Verfahren gemäß einem oder mehrerer der Ansprüche 1 bis 4, dadurch gekennzeichnet, daß die Menge der Trägermaterialien 5 bis 500 l, bevorzugt 10 bis 50 l pro Nm³/h zu behandelndes Gas beträgt.

6. Verfahren gemäß einem oder mehrerer der Ansprüche 1 bis 5, dadurch gekennzeichnet, daß die Entfernung bei Raumtemperatur vorgenommen wird.

7. Verfahren gemäß einem oder mehrerer der Ansprüche 1 bis 6, dadurch gekennzeichnet, daß die Trägermaterialien nach ihrer Sättigung regeneriert werden.

8. Verfahren gemäß Anspruch 7, dadurch gekennzeichnet, daß die Regenerierung bei Raumtemperatur durch

a) Behandlung der Trägermaterialien mit HCl und anschliessende Entfernung der nicht verbrauchten HCl durch Waschen mit Wasser

b) sowie die Aktivierung mit Natronlauge vorgenommen wird, wobei die überschüssige Natronlauge anschließend mit Wasser entfernt wird.

9. Verfahren gemäß Anspruch 7, dadurch gekennzeichnet, daß die Regenerierung mit Natronlauge bei Temperaturen zwischen 120 und 200°C, bevorzugt 130-160°C vorgenommen wird.

10. Verfahren gemäß Anspruch 7, dadurch gekennzeichnet, daß die Regenerierung mit Wasserdampf bei Temperaturen zwischen 180 und 240°C vorgenommen wird.

FIG. 1